# EUROPEAN PATENT APPLICATION

(11) **EP 3 489 694 A1**
(43) Date of publication of application: **29.05.2019**
(21) Application number: 17203561.0
(22) Date of filing: 24.11.2017
(51) Int. Cl.: G01N 35/04, G01N 35/00

(54) **SAMPLE VESSEL AND CAP TRANSPORTATION**

(71) Applicant: Roche Diagnostics GmbH, 68305 Mannheim (DE); F. Hoffmann-La Roche AG, 4070 Basel (CH)
(72) Inventor: HARBERS, Rik, 6343 Rotkreuz (CH)
(74) Representative: Herren, Barbara

(57) **Abstract**

A method (100, 102, 104, 106, 108, 96, 98), a carrier system (18, 19), a sample vessel (10, 12) and cap carrier system (86, 88), and a laboratory system (88, 90) to move a sample vessel (10, 12) and its cap (12, 14) on a transport plane (15, 16) of a laboratory transport system (14, 15) is presented. A sample vessel (10, 12) which is closed with a cap (12, 14) is inserted into a first holder (16, 18, 20, 22) of the carrier system (18, 19). The cap (12, 14) is removed from the sample vessel (10, 12) and positioned in or on a second holder (16, 18, 20, 22) of the carrier system (18, 19). The carrier system (18, 19) is moved over the transport plane (15, 16) of the laboratory transport system (14, 15).

## Description

### Field of the Invention

The present invention belongs to the field of automated in vitro diagnostic sample vessel handling. Within this field, it relates to a method, a carrier system, a sample vessel and cap carrier system, and a laboratory system for transporting sample vessels and their caps on a transport plane of a laboratory transport system.

### Background

In diagnostic laboratory environments sample vessels which contain liquid test samples are transported between multiple stations such as pre- analytical, analytical and post- analytical stations for test sample processing steps according to predefined laboratory workflows. Typically, the sample vessels are transported in carrier systems which can receive either one or multiple sample vessels. In semi-automated laboratories the sample vessels inserted in carrier systems are transported manually. In fully-automated laboratories the carrier systems are moved on a transport plane of a laboratory transport system in order to distribute the test samples to the connected pre- analytical, analytical and post- analytical stations which can conduct different test sample processing steps like preparing, analysing, or archiving of test samples. An example of such a laboratory transport system is disclosed in EP2566787 B1.

To protect the test samples from the environment, sample vessels are usually equipped with caps or closures. Some test sample processing steps include pipetting operations like the aspiration and/or dispensation of test samples out of and/or into the sample vessels using a pipetting device. Prior to such pipetting operations the caps or closures are removed from the sample vessel manually or automatically using for example a cap removal device. Subsequently, the removed caps are discarded as solid bio-waste which may cause environment pollution and extra disposal fees. After completion of all ordered pre- analytical and/ or analytical test sample processing steps, test samples are either discarded in a disposal unit or stored in a laboratory storage and retrieval system in case further test sample processing steps are requested later on. Prior to the disposal or storage, the sample vessels are recapped with new cap material manually or automatically using for example a cap fitting device. However, a fitting cap may not always be available as the dimensions of the caps like diameter or height as well as the geometry varies depending on the corresponding sample vessel type. Accordingly, the best possible protection of the test sample cannot always be ensured leading to potential test sample impurities or cross-contaminations which may have severe consequences on test sample integrity, test results and subsequent diagnosis.

US8834814B2 discloses an automatic analysis system comprising a cap removing/ mounting mechanism and a cap transport mechanism for removing and mounting caps on sample vessels.

There is a need to transport sample vessels and their caps on a laboratory transport system in a simple, reliable and cost-efficient way. It was an object of the present invention to improve conventional sample vessel carrier systems, particularly to better serve the needs of automated in vitro diagnostic sample vessel handling.

### Summary

The present invention discloses a method, a carrier system, a sample vessel and cap carrier system, and a laboratory system for transporting a sample vessel and its cap on a laboratory transport system.

The present invention relates to a method for transporting a sample vessel and its cap on a laboratory transport system. The method comprises the following steps:
- inserting a sample vessel which is closed with a cap into a first holder of a carrier system
- removing the cap from the sample vessel
- positioning the removed cap of the sample vessel in or on a second holder of the carrier system
- moving the carrier system over a transport plane of the laboratory transport system.

The present invention also relates to a carrier system. The carrier system comprises a carrier element, a first holder, and a second holder. The first holder is adapted to receive, hold, and release a sample vessel equipped with a cap. The second holder is adapted to receive, hold, and release the cap. And the first holder and the second holder are positioned on the carrier element.

The present invention further relates to a sample vessel and cap carrier system. The sample vessel and cap carrier system comprises a carrier system as described herein and a sample vessel. The sample vessel is inserted into the first holder of the carrier system. The sample vessel is equipped with a cap and the cap is positioned on the sample vessel or in or on the second holder of the carrier system.

The present invention also relates to a laboratory system. The laboratory system comprises at least one sample vessel and cap carrier system as described herein, at least one cap removal/ fitting device for removing/ fitting the at least one cap on the at least one sample vessel, and a laboratory transport system.

### Detailed description

The present invention relates to a method for transporting a sample vessel and its cap on a laboratory transport system. The method comprises the following steps:
a) inserting a sample vessel which is closed with a cap into a first holder of a carrier system
b) removing the cap from the sample vessel
c) positioning the removed cap of the sample vessel in or on a second holder of the carrier system
d) moving the carrier system over a transport plane of the laboratory transport system.

As used herein, the term "sample vessel" relates to a vessel adapted for receiving, storing, transporting, and/or releasing a sample vessel content such as a test sample (e.g. blood, urine, serum, plasma, or liquefied biopsy sample, etc.) from which the presence and if desired the concentration of an analyte can be determined using an analytical station. The material as well as the dimension of the sample vessel like diameter, side length, height and geometry varies and may depend on the sample vessel content, test sample processing steps to be carried out, and manufacturer. The sample vessel may be a vessel with a cylindrical or cubic shape, a closed bottom, and an open top. Alternatively, the closed bottom of the cylindrical vessel can be rounded. The sample vessel may be provided with a barcode tag or RFID tag for identification purposes.

As used herein, the term "cap" relates to a closure or lid which can be removable fitted on the open top of the sample vessel in order to protect the sample vessel content from the environment or to prevent spilling of the sample vessel content. The cap may be made of different materials like plastic or rubber and may have different shapes and dimensions like diameter and height. The cap may be a screw cap or press-fit cap. The cap can be fitted or removed on/ from the sample vessel by rotating or pulling/ pressing the cap. The cap may be removed nondestructively from the sample vessel and may again be fitted on the same sample vessel after transporting the sample vessel and its cap on a laboratory transport system. Thus, a sample vessel and its cap may form a sample vessel/ cap pair. This has the advantage that no caps have to be discarded after cap removing and a fitting cap for protecting the sample vessel content is always available.

As used herein, the term "laboratory transport system" relates to a system being designed to transport or distribute sample vessels and their caps to connected pre- analytical, analytical or post- analytical stations. The laboratory transport system may comprise a transport plane on which carrier systems loaded with sample vessels and their caps can be transported. The laboratory transport system may comprise a conveyor belt to move the carrier systems. Alternatively, the laboratory transport system may comprise a number of electro-magnetic actuators being stationary arranged below the transport plane and adapted to generate magnetic fields to move the carrier systems. Alternatively, the laboratory transport system may comprise a stable transport plane on which self-propelled carrier systems can move. A pre-analytical station can usually be used for the preliminary processing of test samples or sample vessels. An analytical station can be designed, for example, to use a test sample or part of the test sample and a reagent in order to produce a measurable signal, on the basis of which it is possible to determine whether the analyte is present, and if desired in what concentration. A post-analytical station can usually be used for the post-processing of test samples like the archiving of test samples. The pre-analytical, analytical and post-analytical station may comprise, for example, at least one device from the group of following devices: a sorting device for sorting samples or sample vessels, a cap removal device for removing caps or closures on sample vessels, a cap fitting device for fitting caps or closures on sample vessels, a cap removal/ fitting device for removing/ fitting caps or closures on sample vessels, a pipetting device for pipetting a test sample, an aliquoting device for aliquoting test samples, a centrifuging device for centrifuging test samples, an analyzing device for analyzing a test sample, a heating device for heating a test sample, a cooling device for cooling a test sample, a mixing device for mixing a test sample, a separation device for isolating an analyte of the test sample, a storing device for storing test samples, an archiving device for archiving test samples, a sample vessel type determination device for determining a sample vessel type, a sample quality determination device for determining a sample quality, a sample vessel identification device for identifying a sample vessel. Such pre-analytical stations, analytical stations, post-analytical stations, and devices are well known in the art.

As used herein, the term "carrier system" relates to a device adapted for receiving, holding, transporting, and/or releasing a sample vessel and its corresponding cap. The carrier system may comprise a first and a second holder which form a holder pair. For transporting the sample vessel and its cap on a laboratory transport system, the sample vessel is inserted into a first holder of the carrier system and its cap is positioned on the sample vessel or in or on the second holder of the carrier system. Holding means of sample vessel holders are well known in the art and may be designed as described in EP3093071 or as described in EP3070479.

As used herein, the term "positioning" relates to a manual or automated cap handling step where the cap of the sample vessel is either inserted into the second holder or placed on the second holder of the carrier system so that a secure transport of the cap on the laboratory transport system is possible. For example, the cap of the sample vessel may be inserted into the second holder and held by a holding means (e.g. spring arms) of the second holder. Optionally, the cap may be turned over before it is positioned in the second holder so that soiling of the carrier system can be prevented. Or the cap of the sample vessel may be placed or plugged on the second holder and held by a holding means (e.g. pin) of the second holder.

In one embodiment of the method, during steps b) and c) the first holder and the second holder are positioned adjacent each other. For an efficient execution of step b) and step c) of the method, the two holders may be positioned to each other in such a manner that the transfer distance and transfer time for positioning the cap from the top of the sample vessel to the second holder is as short as possible. Additionally or alternatively, the positions of the two holders to each other may allow an automation of step b) and c) of the method. For example, the distance between the first and second holder is large enough so that a gripper of a cap removal/ fitting device can access the cap when positioned on the sample vessel or in or on the second holder.

In one embodiment of the method, during steps a) and d) of the method the first holder and the second holder are positioned adjacent each other or are separated from each other. Depending on the carrier system the first and the second holder of the carrier system can be moved together or independently over the transport plane as described further below. For example, the sample vessel which is closed with a cap is inserted into the first holder of the carrier system by an operator or a sorting device before the first holder of the carrier system is moved to a pre-analytical station comprising a cap removal/ fitting device. And the second holder of the carrier system is already waiting at the pre-analytical station so that the cap removal/ fitting device can remove the cap from the sample vessel and position the removed cap in or on the second holder of the carrier system as soon as the first holder arrives at the pre-analytical station.

In one embodiment of the method, the first holder is moved along a first route on the transport plane of the laboratory transport system and the second holder is moved along a second route on the transport plane of the laboratory transport system. The first route and the second route have the same destination. And the first route and the second route are the same or different. Depending on the carrier system the first and the second holder of the carrier system can be moved together or independently over the transport plane as described further below. As used herein, the term "route" relates to the way a holder gets or moves from a starting position to a destination. The holder may move directly from the starting position to the destination or via one or more intermediate positions between the starting position and the destination. In the latter case, the route defines the order of intermediate positions the holder passes on its way from the starting position to the destination. The destination may also be a starting position, e.g. if a sample vessel and its cap are transported from a starting position back to the same starting position. Typically, the starting position, the destination, and the one or more intermediate positions between the starting position and destination are located at connected pre- analytical, analytical and post- analytical stations so that test sample processing steps according to predefined laboratory workflows can be conducted. For example, the starting position may be located at a pre-analytical station comprising a cap removal/ fitting device for removing the cap from the sample vessel and positioning the removed cap of the sample vessel in or on a second holder of the carrier system. The destination may be located at a post-analytical station comprising a cap removal/ fitting device for removing the cap from the second holder of the carrier system and fitting the cap on the sample vessel. The one or more intermediate positions between the starting position and destination may be located at one or more analytical stations where test samples are aspirated out of the sample vessel for analysis of the test sample. Furthermore, the one or more intermediate positions may be located at dedicated areas on the transport plane for temporal placing or parking of carrier systems (buffering areas).

In one embodiment of the method, the first holder and the second holder arrive at the destination at the same or at different times. Depending on the carrier system the first and the second holder of the carrier system can be moved together or independently over the transport plane as described further below. For example, the first holder with the sample vessel is moved along a first route determined by the starting position, the destination, and two intermediate positions between the starting position and the destination. And the first holder is stopped at each intermediate position between the starting position and the destination, e.g. for aspirating test sample out of the sample vessels. The second holder with the cap is moved directly to the destination along a second route determined only by the starting position and the destination. As the first route is longer and requires more time than the second route, the second holder with the cap arrives earlier and is waiting for the first holder with the sample vessel at the destination. Optionally, the second holder is moved to a waiting space/system on the transport plane for a temporary stop before it moves to the destination. Alternatively, the second holder is moved with lower priority and hence needs more time or is moved slower over the transport plane to match its arrival with the first holder at the destination. In this case, no waiting space/system on the transport plane is required for the second holder in front of or nearby the destination.

In one embodiment of the method, the method further comprises the following steps:
e) stopping the first holder and the second holder of the carrier system at the destination on the transport plane of a laboratory transport system
f) removing the cap from the second holder of the carrier system
g) fitting the cap on the sample vessel.

In a fully automated laboratory, the destination may be a storage and retrieval system comprising a cap removal/ fitting device for fitting the cap on the sample vessel before the sample vessel is stored in a storage section or discarded in a disposal unit. In a semi-automated laboratory, the destination may be a position on the transport plane of the laboratory transport system where the first and/ or the second holder of the carrier system can be removed from the transport plane of the laboratory transport system by an operator. And the operator removes the cap from the second holder and fits the cap on the sample vessel.

In one embodiment of the method, the first holder and the second holder are positioned on a carrier element of the carrier system. Thus, the first holder and the second holder form a pair for moving a sample vessel/ cap pair comprising a sample vessel and its cap over a transport plane of a laboratory transport system. The carrier element may be a single carrier element part and the first and second holders are paired by being mounted on the single carrier element part. Alternatively, the carrier element may consist of two separated carrier element parts and the first holder is positioned on the first carrier element part and the second holder is positioned on the second carrier element part. Each carrier element part comprises a unique identity and the first holder and the second holder are paired by a record of a data base where the two unique identities are linked to each other in the record.

In one embodiment of the method, step b), c), f) and g) are processed by a cap removal/ fitting device. As used herein, the term "cap removal/ fitting device" relates to a device being designed to remove and/ or fit a cap on a sample vessel as well as to position and/ or remove the cap on a holder of a carrier system. The cap removal / fitting device may further be designed to insert and/or remove a sample vessel into a first holder of the carrier system. The cap removal/ fitting device may comprise a robotic arm equipped with a first gripper to grab the cap or the top part of a sample vessel. The first gripper may turn over the cap. The cap removal/ fitting device may further comprise a second gripper to grab the middle part of the sample vessel when the first gripper removes the cap from the sample vessel. A cap removal/ fitting device may be located at a starting position or at a destination. Such cap removal/ fitting devices are well known in the art and may be designed as described in US8834814B2 or as described in EP2538227B1.

In an alternative embodiment of the method, step b) and c) are processed by a cap removal device and step f) and g) are processed by a cap fitting device. The cap removal device may be located at a starting position whereas the cap fitting device may be located at a destination. As used herein, the term "cap removal device" relates to a device being designed to remove a cap on a sample vessel as well as to position the cap on a holder of a carrier system. The cap removal device may further be designed to insert a sample vessel into a first holder of the carrier system. The cap removal device may comprise a robotic arm equipped with a first gripper to grab the cap or the top part of a sample vessel. The cap removal device may further comprise a second gripper to grab the middle part of the sample vessel when the first gripper removes the cap from the sample vessel. Such cap removal devices are well known in the art. As used herein, the term "cap fitting device" relates to a device being designed to remove the cap on a holder of a carrier system and to fit the cap on a sample vessel. The cap fitting device may comprise a robotic arm equipped with a gripper to grab the cap. Such cap fitting devices are well known in the art and may be designed as described in EP2148208B1.

The present invention also relates to a carrier system. The carrier system comprises a carrier element, a first holder, and a second holder. The first holder is adapted to receive, hold, and release a sample vessel equipped with a cap. The second holder is adapted to receive, hold, and release the cap. And the first holder and the second holder are positioned on the carrier element. The first and the second holder form a holder pair for holding and moving a sample vessel/ cap pair over a transport plane of a laboratory transport system. For moving a sample vessel/ cap pair over the transport plane, the sample vessel can be inserted into the first holder of the carrier system and its cap is either positioned on the sample vessel or in or on the second holder of the carrier system. The carrier element of the carrier system may consist of one or more carrier element parts. The carrier element parts may be made of any suitable material which provides a sufficient stability (e.g. plastic) and may have different shapes and dimensions like diameter and height. For example, the carrier element parts may have a cylindrical or cubic shape. The bottom of the carrier element parts may comprise a bottom plate on which the carrier system can slide over the transport plane of the laboratory transport system.

In one embodiment of the carrier system, the first holder and second holder are mounted on the top of the carrier element. The first and the second holder may be fixed or interchangeably mounted (e.g. bolted or mounted with snap locks) in an upright position on the carrier element. Thus, depending on the used sample vessel types and cap types different sets or pairs of first and second holders can be mounted on the carrier element.

In another embodiment of the carrier system, the first holder and second holder are integrated into the carrier element as a first and second recess. Accordingly, the distances between the barycenter of the sample vessel, cap, and carrier element can be reduced along the vertical axis of the carrier system which may stabilize the movements of the carrier system on the transport plane.

In one embodiment of the carrier system, the first holder comprises a first insertion slot with a first insertion depth, a first insertion opening with a first insertion width, and a first holding means. The second holder comprises a second insertion slot with a second insertion depth, a second insertion opening with a second insertion width, and a second holding means. And the first and second insertion depths or the first and second insertion widths or the shape or dimension of the first and second holding means of the first holder and the second holder are different. As the dimensions like the height and the diameter of sample vessels and their caps are different, the insertion slots and holding means of the first and second holder possess different characteristics for an optimal reception, holding, and release of a sample vessel and its cap.

In a specific embodiment, the first insertion depth of the first holder is larger than the second insertion depth of the second holder. The first insertion depth is smaller than the height of the sample vessel whereas the second insertion depth is smaller than the height of the cap of the sample vessel. Depending on the used sample vessel types, the first insertion depth of the first holder may vary. However, the first insertion depth should be in a range where sample vessels are held securely and at the same time are accessible for an optimal reception and release. The first insertion depth of the first holder may be in a range between 10mm and 40mm, for example 15mm. This also facilitates that a barcode attached to the sample vessel can be read out by a barcode reader.

In another specific embodiment, the first insertion width of the first holder is smaller than the second insertion width of the second holder. Typically, the diameter of a sample vessel is smaller than the diameter of its cap. The first insertion width is equal or slightly smaller than the diameter of a sample vessel so that a flexible holding means (e.g. spring arms) of the first holder can receive and hold sample vessels. The second insertion width is equal or slightly smaller than the diameter of the cap of the sample vessel so that a flexible holding means (e.g. spring arms) of the second holder can receive and hold caps. Depending on the used sample vessel types and cap types, the insertion widths of the insertion slots may vary.

In a further specific embodiment, the first and second holding means is selected from a group consisting of spring arms, elastic inlets, recesses of the carrier element, or a combination thereof. Spring arms as well as elastic inlets may laterally and flexibly engage sample vessels and/ or their caps of different diameters. Depending on the used sample vessel types and cap types, the number, the shape, the material, and the arrangement of the springs or elastic inlets may vary. Alternatively, the holding means may be a recess of the carrier element if for example sample vessels and/ or caps of same dimensions may be transported by the carrier system.

In a more specific embodiment, the first holding means of the first holder comprises at least two first spring arms and the second holding means of the second holder comprises at least two second spring arms. And the length of the at least two first spring arms of the first holder is larger than the length of the at least two second spring arms of the second holder. The length of the at least two first spring arms may contribute to the insertion depth of the first holder and the length of the at least two second spring arms may contribute to the insertion depth of the second holder. If, for example, the holding means is a combination of a recesses of the carrier element and at least two spring arms, the depth of the recess and the length of the spring arms define the insertion depth of the holder. The number and arrangement of the spring arms may differ between the first holder and the second holder as the sample vessel including content may be heavier than the cap. For example, the first holder may comprise three spring arms which are arranged in an equidistant manner around the circumference of the first holder whereas the second holder comprises only two spring arms arranged opposite each other.

In one embodiment of the carrier system, the first holder comprises a first insertion slot with a first insertion depth, a first insertion opening with a first insertion width, and a first holding means. And the second holder comprises a second holding means, wherein the second holding means is at least one pin. For example, the second holder comprises one single pin with a diameter which is substantially equal to the diameter of the cap. Alternatively, multiple pins may be arranged in an equidistant manner around a circumference with a diameter which is substantially equal to the diameter of the cap. The height of the pin(s) may be slightly larger than the height of the cap so that direct contact between the cap and the carrier element can be prevented. The pin(s) may be made of solid material (e.g. plastic) if for example caps of same dimensions are positioned on the pin(s). Alternatively, the pin(s) may be made of flexible material (e.g. rubber) if caps of different dimensions are positioned on the pin(s).

In one embodiment of the carrier system, the carrier element further comprises an elevated platform and the second holder is positioned on the elevated platform. Accordingly, the distance between the cap position on the sample vessel and the cap position in or on the second holder of the carrier system is shortened for an efficient execution of step b), step c), step f), and step g) of the method. Additionally, the elevated cap position in or on the second holder may facilitate an automation of step b), step c), step f), and step g) of the method. A further advantage of the elevated cap position in or on the second holder may be that the cap is further away from the transport plane and better protected from impurities originating from the transport plane of the laboratory transport system (e.g. dust on the transport plane), in particular when the cap is turned over before it is positioned in or on the second holder. Furthermore, the elevated platform may also contribute to a better balance of the carrier system.

In one embodiment of the carrier system, the carrier element consists of a single carrier element part and the first holder and second holder are positioned adjacent each other on the single carrier element part. As the first holder and the second holder are mounted on the same single carrier element part, a sample vessel and its cap can be moved together along the same routes on the transport plane of a laboratory transport system. Accordingly, the cap of the sample vessel is available at any time for fitting the cap on the sample vessel.

In a specific embodiment, the single carrier element part has a horizontal cross section and a first longitudinal axis perpendicular to and in the midpoint of its horizontal cross section, the first holder has a horizontal cross section and a second longitudinal axis perpendicular to and in the midpoint of its horizontal cross section, and the second holder has a horizontal cross section and a third longitudinal axis perpendicular to and in the midpoint of its horizontal cross section. And the first distance between the second longitudinal axis of the first holder and the longitudinal axis of the single carrier element part is shorter than the second distance between the third longitudinal axis of the second holder and the first longitudinal axis of the single carrier element part. As the sample vessel including content may be heavier than its cap, the sample vessel including content should be located as centrally as possible on the single carrier element part for an improved balance of the carrier system. The cross section of the single carrier element part may possess different geometric forms like a circle, square, rectangle, or ellipse. Also the cross sections of the first and second holder may possess different geometric forms. For example, the cross sections of the first and second holder may be circles for transporting sample vessels with cylindrical shapes. Or the cross sections of the first and second holder may be squares for transporting sample vessel with cubic shapes.

In a further specific embodiment, the single carrier element part of the carrier system further comprises an orientation mark. The orientation mark may have a predefined position relative to the first and second holder of the carrier system so that the position of the first and second holder on the transport plane or in a pre-analytical, analytical, and or post-analytical station may be determined. The orientation mark may be defined as recesses or protrusion of the single carrier element part. Alternatively, the orientation mark may be attached on the surface of the carrier system. The orientation mark may be detectable by an orientation mark detection device like a camera, light barrier, laser, pressure sensor, barcode reader, RFID reader, or a combination thereof.

In a more specific embodiment, the orientation mark comprises a tag attached to the single carrier element part. The tag may be a barcode tag or RFID tag on which information of the carrier system and/ or of its current load may be stored. For example, a unique identity of the carrier system or operational information of the carrier system like time and location related information which could be used for maintenance purposes may be stored on the tag. Furthermore, information about the sample vessel or its content like a sample vessel type, test sample type, expiration dates, timestamps, or a combination thereof may be stored on the tag.

In one embodiment of the carrier system, the single carrier element part is connected to at least one further single carrier element part. Accordingly, multiple sample vessels and their caps can be moved together along the same routes on a transport plane of a laboratory transport system. The single carrier element parts may be interchangeably connected to each other (e.g. bolted or connected with latch-fits/ snap-latches). Based on specific requirements of a laboratory environment which may depend on the available laboratory transport system, the number of pre-analytical and analytical stations, and throughputs of each pre-analytical and analytical station, the number of connected single carrier element parts may be configurable.

In another embodiment, the connected single carrier element parts form one common carrier element part. For example, the common carrier element part may be one single molded work piece (e.g. manufactured by injection molding) comprising multiple holder pairs for moving multiple sample vessel/ cap pairs over a transport plane at the same time.

In one embodiment of the carrier system, the carrier element consists of a first and a second carrier element part and the first and the second carrier element part are separated. The first holder is positioned on top of the first carrier element part and the second holder is positioned on top of the second carrier element part. The first carrier element part comprises a first unique identity and the second carrier element part comprises a second unique identity, wherein the first unique identity and the second unique identity are linked to each other in a record of a database. As the first holder and the second holder are mounted on two separated carrier element parts, a sample vessel and its cap can be moved independently along the same or different routes on the transport plane of a laboratory transport system. The cross sections of the first and the second carrier element part may possess different geometric forms like a circle, square, rectangle, or ellipse. Furthermore, the geometric form of the first carrier element part may differ from geometric form of the second carrier element part. As one holder may be positioned on one carrier element part, this carrier system can be used on laboratory transport systems designed for moving single sample vessel carriers which are well known in the art. The unique identities of the first carrier element part and the second carrier element part may be stored as unique identifiers on barcode tags or RFID tags. The unique identities may be readout by a barcode or RFID reader located at dedicated positions in a laboratory system, e.g. the barcode or RFID readers may be located at or in close proximity of a cap removal/fitting device. In addition to the linkage of the two unique identities, the record in the database may further associate or link additional information with the first and second unique identity such as, as a non-limiting example, operational information of the first and/ or second carrier element part such as time and location related information.
Additionally, sample vessel related information like sample vessel identity, sample vessel type, sample vessel content, test sample type, test sample expiration date, timestamps, or a combination thereof may be linked to the first unique identity of the first holder.
Additionally, information about the cap of the sample vessel like cap identity or cap type may be linked to the second unique identity of the second holder.
Alternatively, the operational information of the first carrier element part and/ or sample vessel related information may be stored together with the first unique identity on a barcode tag or RFID tag. And the operational information of the second carrier element part and/ or information about the cap of the sample vessel may be stored together with the second unique identity on a barcode tag or RFID tag.

In a specific embodiment, the single carrier element part or the first and the second carrier element part of the carrier element have cylindrical shapes with a circular horizontal cross section. Such a cylindrical shape of carrier element parts may advantageously facilitate the movements of carrier element parts on the transport plane, in particular if carrier element parts are moved along guiding elements located on the transport plane such as guardrails or gates.

In one embodiment, the single carrier element part or the first and the second carrier element part of the carrier element are configured to move over a transport plane of a transport system. The carrier element parts may be moved passively or may move actively over the transport plane of the transport system for transporting a sample vessel and its cap.

In a specific embodiment, the single carrier element part or the first and the second carrier element part of the carrier element are configured to be moved along a route via magnetic forces.

In a more specific embodiment, the single carrier element part or the first and the second carrier element part of the carrier element comprise at least one magnetically active device which interacts with a magnetic field so that a magnetic force is applied to the single carrier element part or to the first and the second carrier element part of the carrier element. A carrier element part comprising at least one magnetically active device which interacts with a magnetic field is well known in the art and may be designed as described in EP2988134A1 or as described in EP3070479A1.

In another specific embodiment, the single carrier element part or the first and the second carrier element part of the carrier element comprise motor-driven wheels. A carrier element part comprising motor-driven wheels is well known in the art and may be designed as described in US9182419B2.

The present invention further relates to a sample vessel and cap carrier system. The sample vessel and cap carrier system comprises a carrier system as described herein and a sample vessel. The sample vessel is inserted into the first holder of the carrier system. The sample vessel is equipped with a cap and the cap is positioned on the sample vessel or in or on the second holder of the carrier system.

The present invention also relates to a laboratory system. The laboratory system comprises at least one sample vessel and cap carrier system as described herein, at least one cap removal/ fitting device for removing/ fitting the at least one cap on the at least one sample vessel, and a laboratory transport system.

In one embodiment of the laboratory system, the laboratory transport system comprises a conveyor system. The conveyor system may comprise a conveyor belt in order to move and stop a carrier system or sample vessel and cap carrier system on the transport plane. Such a conveyor system comprising a conveyor belt is well known in the art and may be designed as described in US6599476B1.

In one embodiment of the laboratory system, the laboratory transport system comprises a number of electro-magnetic actuators being stationary arranged below a transport plane, the electro-magnetic actuators being adapted to generate magnetic fields to move a carrier system or a sample vessel and cap carrier system over the transport plane. Such a laboratory transport system is well known in the art and may be designed as described in EP2566787B1.

In one embodiment of the laboratory system, the laboratory system further comprises a control device and a database.

The term "control device" as used herein encompasses any physical or virtual processing device configurable to control the laboratory system in a way that sample vessels and their caps inserted in carrier systems are moved and stopped on the transport plane of the laboratory transport system. The control device may receive information from a data management unit regarding which sample vessel handling steps need to be performed for which sample vessels and at what time. Based on this information, the control device may determine the first route and the second route on the transport plane of the laboratory transport system on which the first and second holder of the carrier system is moved. The control device may control the laboratory transport system to move and/ or stop the carrier system to/ or at the right position on the transport plane of the laboratory transport system. The control device may further control the cap removal/ fitting device to remove and fit a cap from/ on a sample vessel as well as to position and remove the cap in or on/ from the second holder of the carrier system. The control device may, for instance, be embodied as a programmable logic controller adapted to execute a computer-readable program provided with instructions to perform sample tube handling steps of the laboratory system. Examples of such sample tube handling steps are to insert a sample vessel which is closed with a cap into a first holder of a carrier system, to remove the cap from the sample vessel, to position the removed cap of the sample vessel in or on a second holder of the carrier system, to move the first and second holder of the carrier system over a transport plane of a laboratory transport system along a first and second route, to stop the first holder and the second holder of the carrier system at the destination on the transport plane, to aspirate and/ or dispense a test sample out of and/or into the sample vessel, to remove the cap from the second holder of the carrier system, and to fit the cap on the sample vessel.

In one embodiment, the control device and the database are comprised by the laboratory system.

In another embodiment, the control device is an external control device communicatively connected to the laboratory system. And the data base is an external database communicatively connected to the external control device.

### Short description of the figures

Fig. 1 shows a sequence of steps of the method for transporting a sample vessel and its cap on a laboratory transport system.
Fig. 2 depicts a flowchart of the method for transporting a sample vessel and its cap on a laboratory transport system.
Fig. 3 shows an example of routes on a transport plane of a laboratory transport system on which the first and the second holder of the carrier system according to one embodiment move.
Fig. 4 shows another example of routes on a transport plane of a laboratory transport system on which the first and the second holder of the carrier system according to another embodiment move.
Fig. 5 shows an embodiment of the carrier system.
Fig. 6 shows further embodiments of the carrier system.
Fig. 7 shows another embodiment of the carrier system.
Fig. 8 shows an embodiment of the laboratory system.

### Detailed description of the figures

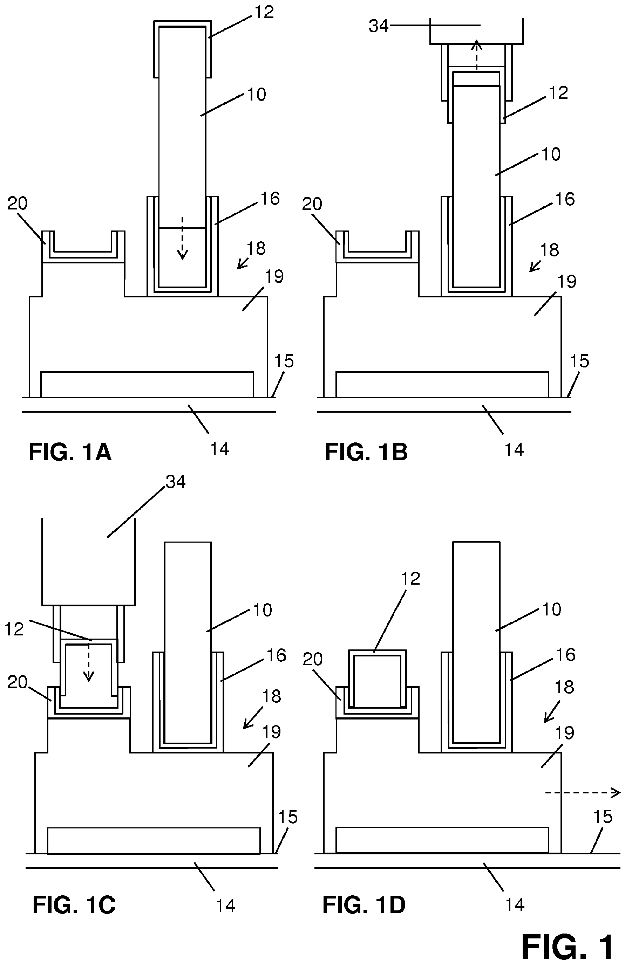

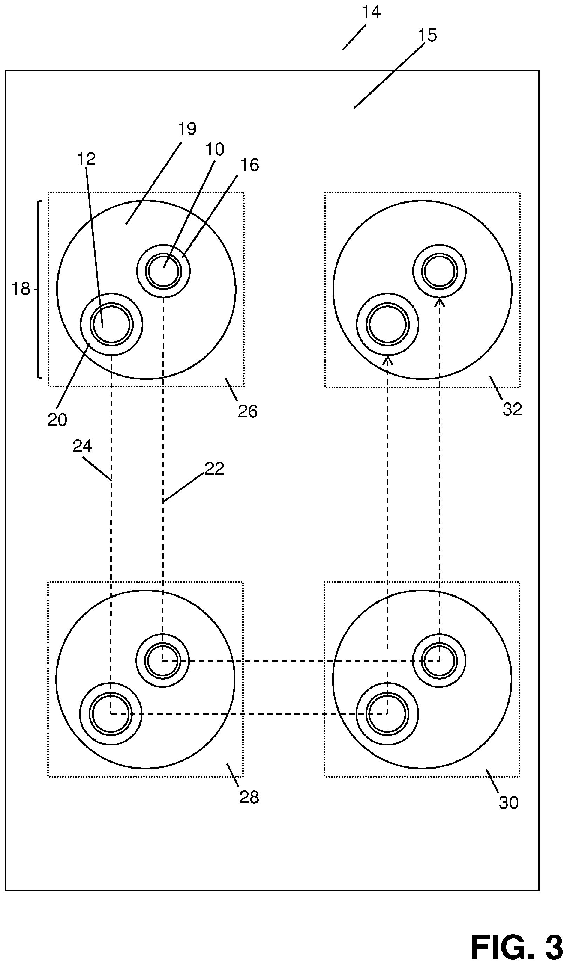

**In** **Fig. 1A-G** a sample vessel and cap carrier system comprising a carrier system (18) and a sample vessel (10) equipped with a cap (12), a cap removal/ fitting device (34), and a laboratory transport system (14) is shown in order to depict a sequence of steps of the method for transporting the sample vessel (10) and its cap (12) over a transport plane (15) of the laboratory transport system (14).
As indicated by the dashed arrow in Fig. 1A, in step a) (94) of the method, the sample vessel (10) which is closed with the cap (12) is inserted into a first holder (16) of the carrier system (18). The first holder (16) is mounted on the top of a single carrier element part (19) of the carrier system (18). Step a) (94) of the method can be conducted either manually or automated, e.g. conducted by the cap removal/ fitting device (34) or a resorting station.
In step b) (96) of the method, the cap (12) is removed from the open top of the sample vessel (10) by a cap removal/ fitting device (34) as indicated by the dashed arrow in Fig. 1B.
Subsequently, in step c) (98) of the method, the removed cap (12) of the sample vessel (10) is positioned in a second holder (20) of the carrier system (18) as indicated by the dashed arrow in Fig. 1C. The second holder (20) is mounted on the top of the single carrier element part (19) of the carrier system (18) adjacent to the first holder (16) of the carrier system (18).
In the next step d) (100) of the method, the carrier system (18) is moved over the transport plane (15) of the laboratory transport system (14) as indicated by the dashed arrow in Fig. 1D. The carrier system (18) is moved from a starting position (26) to a destination (32) as shown in Fig. 3 below.

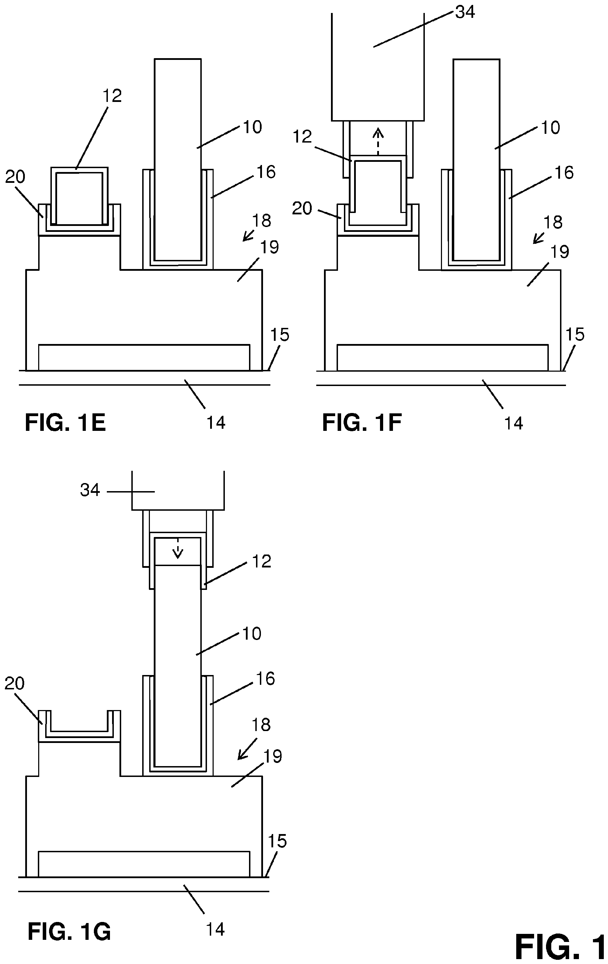

Fig. 1E shows step e) (102) of the method wherein the carrier system (18) stops at the destination (32).
As indicated by the dashed arrow in Fig. 1F, the cap (12) of the sample vessel (10) is removed from the second holder (20) of the carrier system (18) in step f) (104) of the method. Afterwards, the cap (12) of the sample vessel (10) is fitted on the sample vessel (10) in step g) (106) of the method as indicated by the dashed arrow in Fig.1G.

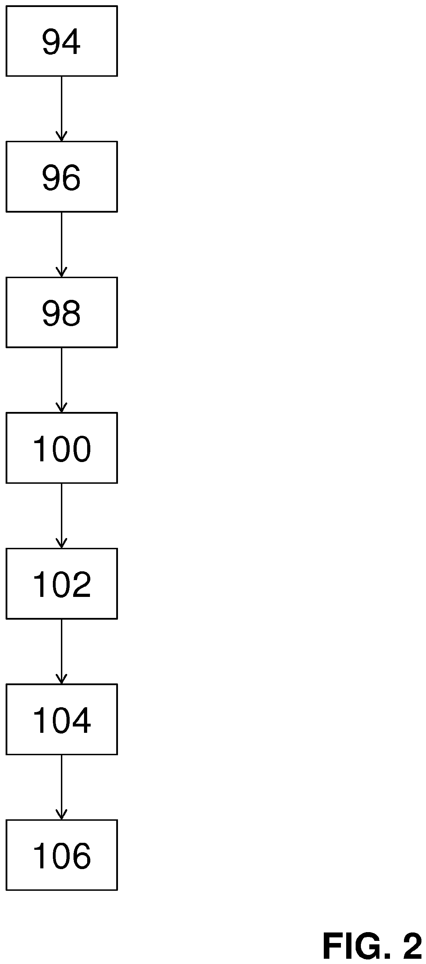

**Fig. 2** depicts a flowchart of the method for transporting a sample vessel (10) and its cap (12) over a transport plane (15) of a laboratory transport system (14). In step a) (94) of the method, a sample vessel (10) which is closed with a cap (12) is inserted into a first holder (16) of the carrier system (18). In step b) (96) of the method, the cap (12) is removed from the sample vessel (10).

Subsequently, in step c) (98) of the method, the removed cap (12) of the sample vessel (10) is positioned in or on the second holder (20) of the carrier system (18). In step d) (100) of the method, the carrier system (18) is moved over a transport plane (15) of a laboratory transport system (14). Then, the carrier system (18) is stopped at a destination (32) on the transport plane (15) of a laboratory transport system (14) in step e) (102) of the method before the cap (12) is removed from the second holder (20) of the carrier system (18) in step f) (104) of the method and fitted on the sample vessel (10) in step g) (106) of the method.

**Fig. 3** shows an example of routes (22, 24) on a transport plane (15) of a laboratory transport system (14) on which the first and the second holder (16, 20) of the carrier system (18) according to one embodiment move. The carrier element (19) of the carrier system (18) comprises a single carrier element part (19) on which the first and the second holder (16, 20) are mounted adjacent each other. The first holder (16) holds the sample vessel (10) and the second holder (20) holds the cap (12) of the sample vessel (10).
In the shown example, the transport plane comprises a starting position (26), a destination (32), a first intermediate position (28), and a second intermediate position (30) as indicated by dotted squares. The routes (22, 24) define the ways the first holder (16) and second holder (20) get to the destination (32) starting from a starting position (26). The routes (22, 24) also define the order of intermediate positions (28, 30) the holders (16, 20) pass on their way from the starting position (26) to the destination (30).
As indicated by a dashed arrow, the first holder (16) is moved along a first route (22) on the transport plane (15) of the laboratory transport system (14) from the starting position (26) via the first intermediate position (28) and second intermediate position (30) to the destination (32). As indicated by another dashed arrow, the second holder (20) is moved along a second route (24) on the transport plane (15) of a laboratory transport system (14) from the starting position (26) via a first intermediate position (28) and second intermediate position (30) to the destination (32). As the first and the second holder (16, 20) are mounted on the same single carrier element part (19) of the carrier system (18), the first holder (16) and the second holder (20) can move together along the first route (22) and the second route (24) which are the same. Thus, both routes (22, 24) lead from the starting position (26) to the destination (32) via the first intermediate position (28) and the second intermediate position (30). Additionally, the first holder (16) and the second holder (20) arrive at the destination (32) at the same time.

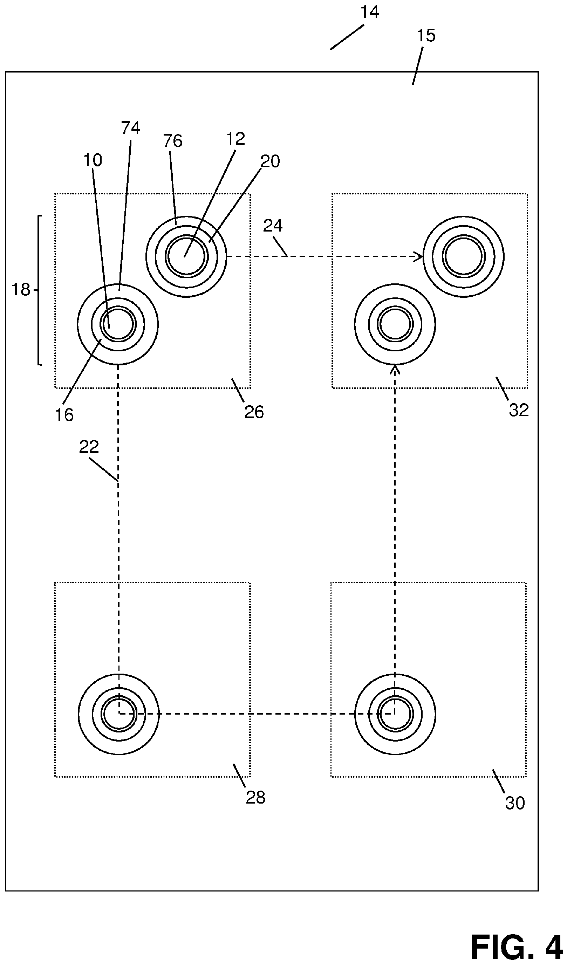

**Fig. 4** shows another example of routes (22, 24) on a transport plane (15) of a laboratory transport system (14) on which the first and the second holder (16, 20) of the carrier system (18) according to another embodiment move. The carrier element (74, 76) of the carrier system (18) consists of a first and a second carrier element part (74, 76) which are separated. The first holder (16) is positioned on top of the first carrier element part (74) and holds the sample vessel (10). The second holder (20) is positioned on top of the second carrier element part (76) and holds the cap (12) of the sample vessel (10).
In the shown example, the transport plane comprises a starting position (26), a destination (32), a first intermediate position (28), and a second intermediate position (30) as indicated by dotted squares. The routes (22, 24) define the ways the first holder (16) and second holder (20) get to the destination (32) starting from the starting position (26). The first route (22) also defines the order of intermediate positions (28, 30) the first holder (16) passes on its way from the starting position (26) to the destination (32).
As indicated by a dashed arrow the first holder (16) is moved along a first route (22) on the transport plane (15) of the laboratory transport system (14) from the starting position (26) via the first intermediate position (28) and second intermediate position (30) to the destination (32). As indicated by another dashed arrow, the second holder (20) is moved along a second route (24) on the transport plane (15) of a laboratory transport system (14) from the starting position (26) directly to the destination (32). As the first and the second holder (16, 20) are mounted on two separated carrier element parts (74, 76) of the carrier system (18), they can move independently along the first route (22) and second route (24) which are different. Thus, the first route (22) leads from the starting position (26) to the destination (32) via the first intermediate position (28) and the second intermediate position (30) whereas the second route (24) leads directly from the starting position (26) to the destination (32). Additionally, the first holder (16) and the second holder (20) can arrive at the destination (32) at the same time or at different times.

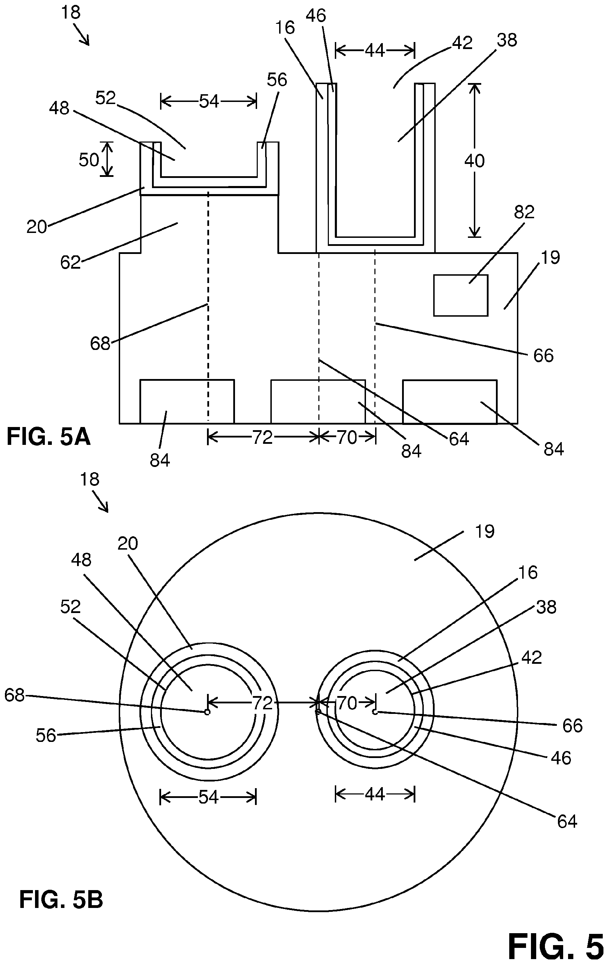

**Fig. 5A-B** show a side and top view of one embodiment of the carrier system (18) which comprises a carrier element (19), a first holder (16) for receiving, holding, and releasing a sample vessel (10), and a second holder (20) for receiving, holding, and releasing the cap (12) of the sample vessel (10). As shown in the side view of **Fig. 5A****,** the carrier element (19) consists of a single carrier element part (19) and the first holder and second holder (16, 29) are positioned adjacent each other on the single carrier element part (19).

The first holder (16) comprises a first insertion slot (38) with a first insertion depth (40), a first insertion opening (42) with a first insertion width (44), and a first holding means (46) which may be a first elastic inlet (46). The second holder (20) comprises a second insertion slot (48) with a second insertion depth (50), a second insertion opening (52) with a second insertion width (54), and a second holding means (56) which may be a second elastic inlet (56).
As shown, the first holder (16) is different from the second holder (20). The first insertion depth (40) of the first holder (16) is larger than the second insertion depth (50) of the second holder (20) so that a sample vessel (10) can optimally be held in the first holder (16) and its cap (12) can optimally be held in the second holder (20). Typically, the diameter of the sample vessel (10) is smaller than the diameter of its cap (12). Accordingly, the first insertion width (44) of the first holder (16) is smaller than the second insertion width (54) of the second holder (20) for an optimal hold of the sample vessel (10) in the first holder and an optimal hold of its cap (12) in the second holder (20).
The shown single carrier element part (19) further comprises an elevated platform (62) on which the second holder (20) is positioned.
In the shown example, the single carrier element part (19) comprises three magnetically active devices (84) which can interact with a magnetic field so that a magnetic force is applied to the single carrier element part (19) in order to move the carrier system (18) over a transport plane (15).
Furthermore, the single carrier element part (19) may comprise an orientation mark (82) to determine the position of the first and second holder on the transport plane (15) or in a pre-analytical, analytical, and or post-analytical station.
As shown in the top view of **Fig. 5B****,** the single carrier element part (19), the first holder (16), and the second holder (20) of the carrier system (18) have circular horizontal cross sections.
The single carrier element part (19) has a first longitudinal axis (64) perpendicular to and in the midpoint of its horizontal cross section. The first holder has a second longitudinal axis (66) perpendicular to and in the midpoint of its horizontal cross section. The second holder (20) has a third longitudinal axis (68) perpendicular to and in the midpoint of its horizontal cross section. For an optimal balance of a sample vessel and cap carrier system (86), the first distance (70) between the second longitudinal axis (66) of the first holder (16) and the first longitudinal axis (64) of the single carrier element part (19) is shorter than the second distance (72) between the third longitudinal axis (68) of the second holder (20) and the first longitudinal axis (64) of the single carrier element part (19).

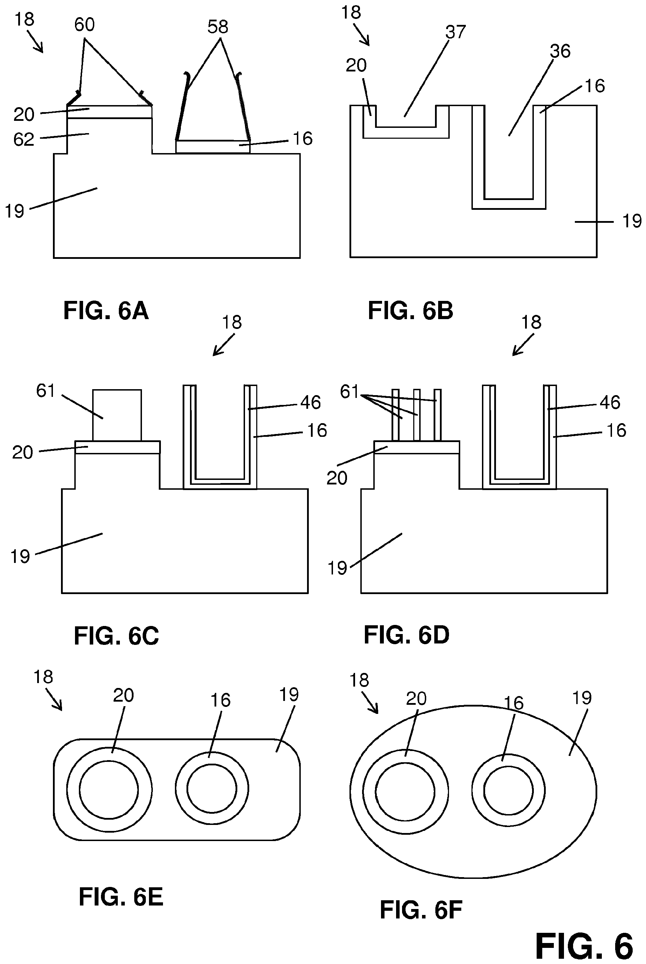

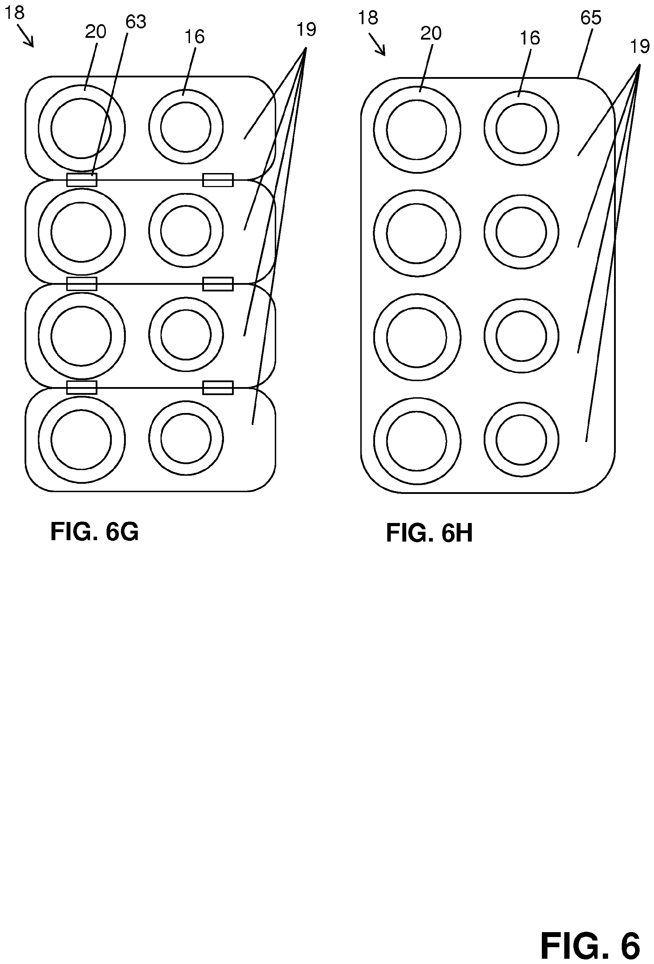

**Fig. 6A-E** show further embodiments of a carrier system (18). As shown in Fig. 6A, the first holding means (58) of the first holder (16) comprises at least two first spring arms (58).The second holding means (60) of the second holder (20) comprises at least two second spring arms (60). The length of the at least two first spring arms (58) of the first holder (16) is larger than the length of the at least two second spring arms (60) of the second holder (20).
In Fig. 6B, the first holder (16) and second holder (20) are integrated into the carrier element (19) as a first and second recess (36, 37) without any additional holding means. Optionally, the first and second recess (36, 37) may be equipped with holding means such as for example elastic inlets (46, 56).
The first holding means of the first holder and the second holding means of the second holder may be different. For example, the first holding means (46) is an elastic inlet (46) for holding the sample vessel (10) whereas the second holding means (61) is a pin (61) or an arrangement of pins (61) on which the cap (12) of the sample vessel (10) can be positioned as depicted in Fig. 6C and Fig. 6D respectively.
Fig. 6E and Fig. 6F show carrier systems which have rectangular or elliptic cross sections. Multiple single carrier element parts (19) may be interchangeably connected to each other with latch-fits or snap-latches (63) for moving multiple sample vessels and their caps together over a transport plane of a laboratory transport system as shown in Fig. 6G.
Alternatively, the connected single carrier element parts (19) may form one common carrier element part (65). The common carrier element part (65) may be one single molded work piece comprising multiple holder pairs (16, 20).

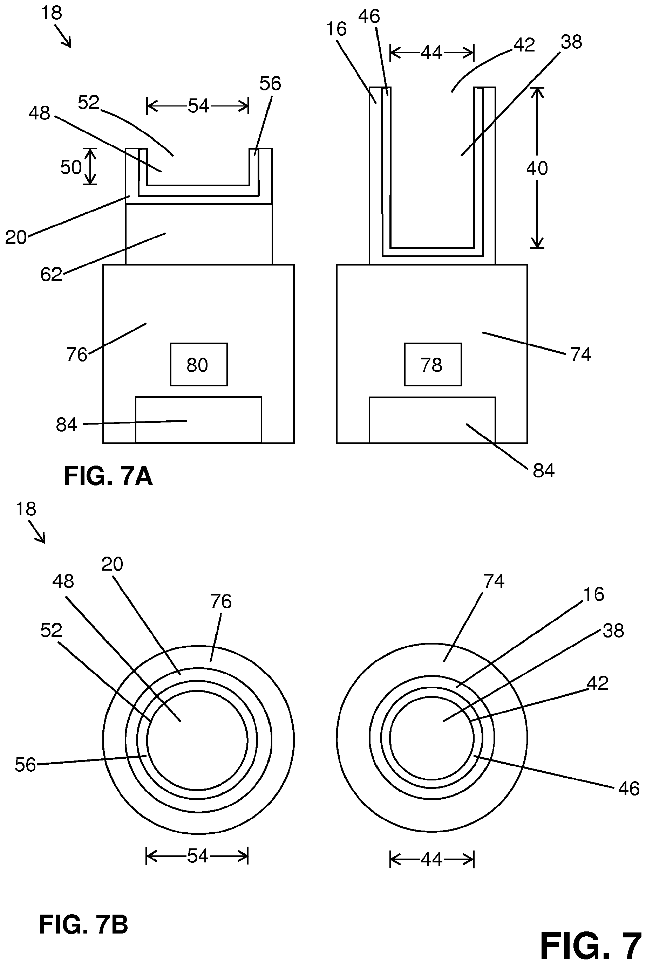

**Fig. 7A-B** show a side and top view of another embodiment of the carrier system (18) which comprises a carrier element (74, 76), a first holder (16) for receiving, holding, and releasing a sample vessel (10), and a second holder (20) for receiving, holding, and releasing the cap (12) of the sample vessel (10).
As shown in the side view of Fig. 7A, the carrier element (74, 76) consists of a first carrier element part (74) and a second carrier element part (76) which are separated. The first holder (16) is positioned on top of the first carrier element part (74).The second holder (20) is positioned on top of the second carrier element part (76).
Each of the two carrier element parts (74, 76) comprises a unique identity (78, 80) which is linked to each other in a record of a database (92). Thus, the first carrier element part (74) and second carrier element part (76) form a pair for transporting a sample vessel (10) and its cap (12) over a transport plane (15) of a laboratory transport system (14).
The first holder (16) comprises a first insertion slot (38) with a first insertion depth (40), a first insertion opening (42) with a first insertion width (44). A first holding means (46) of the first holder (16) is an elastic inlet (46). The second holder (20) comprises a second insertion slot (48) with a second insertion depth (50), a second insertion opening (52) with a second insertion width (54). A second holding means (56) of the second holder (20) is an elastic inlet (46).
As shown, the first holder (16) is different from the second holder (20). The first insertion depth (40) of the first holder (16) is larger than the second insertion depth (50) of the second holder (20) so that a sample vessel (10) can optimally be held in the first holder (16). Its cap (12) can optimally be held in the second holder (20). Typically, the diameter of the sample vessel (10) is smaller than the diameter of its cap (12). Accordingly, the first insertion width (44) of the first holder (16) is smaller than the second insertion width (54) of the second holder (20) for an optimal hold of the sample vessel (10) in the first holder and an optimal hold of its cap (12) in the second holder (20).
The shown second carrier element part (76) further comprises an elevated platform (62) on which the second holder (20) is positioned.
As shown in the top view of Fig. 7B, the first and a second carrier element part (74, 76) have circular horizontal cross sections. Each of the first and a second carrier element part (74, 76) comprises a magnetically active device (84).The magnetically active device (84) can interact with a magnetic field generated by the laboratory transport system (14) so that a magnetic force can be applied to each of the first and second carrier element part (74, 76) in order to move the first and second carrier element part (74, 76) independently of one another over a transport plane (15) of a laboratory transport system (14).

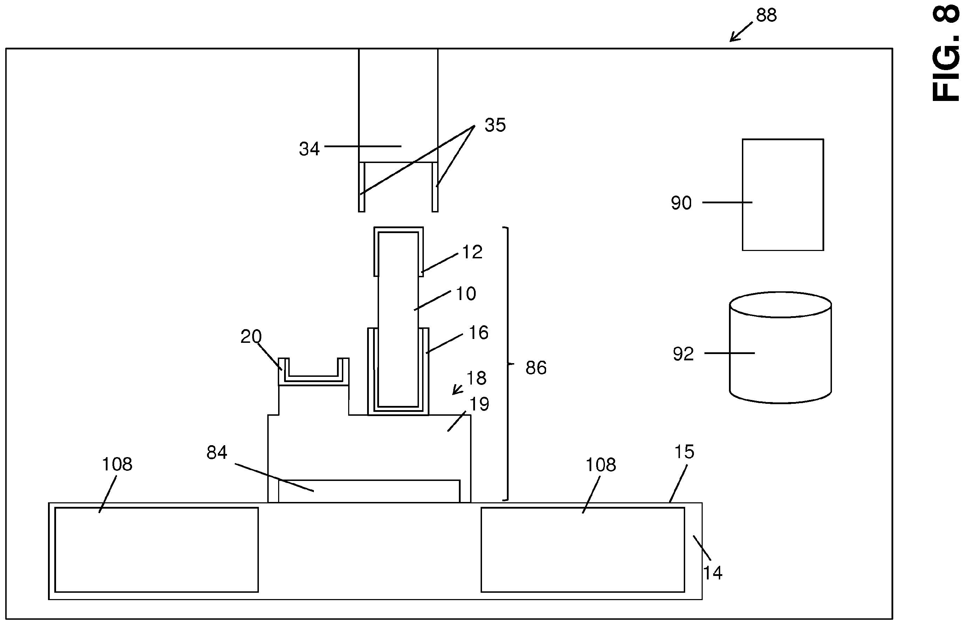

**Fig. 8** shows an embodiment of a laboratory system (88). The laboratory system (88) comprises at least one sample vessel and cap carrier system (86), at least one cap removal/ fitting device (34), and a laboratory transport system (14).
The at least one sample vessel and cap carrier system (86) comprises a carrier system (18) as shown in Fig. 5, a sample vessel (10) inserted into the first holder (16) of the carrier system (18), and a cap (12) positioned on the sample vessel (10).
The shown sample vessel and cap carrier system (86) is positioned on the transport plane (15) in such a manner that the gripper (35) of the at least one cap removal/ fitting device (34) can remove the cap (12) from the sample vessel (10) and position the removed cap (12) of the sample vessel (10) in the second holder (20) of the carrier system (18). The laboratory transport system (14) comprises a number of electro-magnetic actuators (108) being stationary arranged below the transport plane (15). The electro-magnetic actuators (108) being adapted to generate magnetic fields which interact with a magnetically active device (84) of the carrier system (18) in order to move the sample vessel and cap carrier system (86) over the transport plane (15). The shown laboratory system (88) further comprises a control device (90) and a database (92) which functions as described above to move the sample vessel and its cap to the desired destination.

### List of reference numbers

- 10: sample vessel
- 12: cap
- 14: laboratory transport system
- 15: transport plane
- 16: first holder
- 18: carrier system
- 19: single carrier element part
- 20: second holder
- 22: first route
- 24: second route
- 26: starting position
- 28: first intermediate position
- 30: second intermediate position
- 32: destination
- 34: cap removal/ fitting device
- 35: gripper
- 36: first recess
- 37: second recess
- 38: first insertion slot
- 40: first insertion depth
- 42: first insertion opening
- 44: first insertion width
- 46: first elastic inlet
- 48: second insertion slot
- 50: second insertion depth
- 52: second insertion opening
- 54: second insertion width
- 56: second elastic inlet
- 58: first spring arms
- 60: second spring arms
- 61: pin
- 62: elevated platform
- 63: latch-fit or snap-latch
- 64: first longitudinal axis
- 65: common carrier element part
- 66: second longitudinal axis
- 68: third longitudinal axis
- 70: first distance
- 72: second distance
- 74: first carrier element part
- 76: second carrier element part
- 78: first unique identity
- 80: second unique identity
- 82: orientation mark
- 84: magnetically active device
- 86: sample vessel and cap carrier system
- 88: laboratory system
- 90: control device
- 92: database
- 94: step a) of the method
- 96: step b) of the method
- 98: step c) of the method
- 100: step d) of the method
- 102: step e) of the method
- 104: step f) of the method
- 106: step g) of the method
- 108: electro-magnetic actuator

## Claims

1. Method for transporting a sample vessel (10) and its cap (12) on a laboratory transport system (14) comprising the following steps (94, 96, 98, 100):
a) inserting a sample vessel (10) which is closed with a cap (12) into a first holder (16) of a carrier system (18)
b) removing the cap (12) from the sample vessel (10)
c) positioning the removed cap (12) of the sample vessel (10) in or on a second holder (20) of the carrier system (18)
d) moving the carrier system (18) over a transport plane (15) of the laboratory transport system (14).

2. Method according to claim 1, wherein the first holder (16) is moved along a first route (22) on the transport plane (15) of the laboratory transport system (14), wherein the second holder (20) is moved along a second route (24) on the transport plane (15) of the laboratory transport system (14), wherein the first route (22) and the second route (24) have the same destination (32), wherein the first route (22) and the second route (24) are the same or different.

3. Method according to any one of claims 1 to 2, wherein the method further comprises the following steps (102, 104, 106):
e) stopping the first holder (16) and the second holder (20) of the carrier system (18) at the destination (32) on the transport plane (15) of a laboratory transport system (14)
f) removing the cap (12) from the second holder (20) of the carrier system (18)
g) fitting the cap (12) on the sample vessel (10).

4. Carrier system (18), comprising:
- a carrier element (19, 74, 76)
- a first holder (16), wherein the first holder is adapted to receive, hold, and release a sample vessel (10) equipped with a cap (12)
- a second holder (20), wherein the second holder is adapted to receive, hold, and release the cap (12), wherein the first holder (16) and the second holder (20) are positioned on the carrier element (19, 74, 76).

5. Carrier system (18) according to claim 4, wherein the first holder (16) comprises a first insertion slot (38) with a first insertion depth (40), a first insertion opening (42) with a first insertion width (44), and a first holding means (36, 46, 58), wherein the second holder (20) comprises a second insertion slot (48) with a second insertion depth (50), a second insertion opening (52) with a second insertion width (54), and a second holding means (37, 56, 60), wherein the first and second insertion depths (40, 50) or the first and second insertion widths (44, 54) or the shape or dimension of the first and second holding means (36, 37, 46, 56, 58, 60) of the first holder (16) and the second holder (20) are different.

6. Carrier system (18) according to claim 5, wherein the first insertion depth (40) of the first holder (16) is larger than the second insertion depth (50) of the second holder (20).

7. Carrier system (18) according to claims 5 or 6, wherein the first insertion width (44) of the first holder (16) is smaller than the second insertion width (54) of the second holder (20).

8. Carrier system (18) according to any one of claims 5 to 7, wherein the first and second holding means (36, 37, 46, 56, 58, 60) is selected from a group consisting of spring arms (58, 60), elastic inlets (46,56), recesses (36, 37) of the carrier element (19, 74, 76), or a combination thereof.

9. Carrier system (18) according to claim 4, wherein the first holder (16) comprises a first insertion slot (38) with a first insertion depth (40), a first insertion opening (42) with a first insertion width (44), and a first holding means (36, 46, 58), wherein the second holder comprises a second holding means (61), wherein the second holding means is at least one pin (61).

10. Carrier system (18) according to any one of claims 4 to 9, wherein the carrier element (19, 74, 76) further comprises an elevated platform (62), wherein the second holder (20) is positioned on the elevated platform (62).

11. Carrier system according to any one of claims 4 to 10, wherein the carrier element (19) consists of a single carrier element part (19), wherein the first holder (16) and second holder (29) are positioned adjacent each other on the single carrier element part (19).

12. Carrier system (18) according to any one of claims 4 to 10, wherein the carrier element (74, 76) consists of a first and a second carrier element part (74, 76), wherein the first and the second carrier element part (74, 76) are separated, wherein the first holder (16) is positioned on top of the first carrier element part (74) and the second holder (20) is positioned on top of the second carrier element part (76), wherein the first carrier element part (74) comprises a first unique identity (78) and the second carrier element part (76) comprises a second unique identity (80), wherein the first unique identity (78) and the second unique identity (80) are linked to each other in a record of a database (92).

13. Carrier system (18) according to any one of claims 11 to 12, wherein the single carrier element part (19) or the first and the second carrier element part (74, 76) of the carrier element (19, 74, 76) are configured to move over a transport plane (15) of a transport system (14).

14. Sample vessel and cap carrier system (86), comprising:
- a carrier system (18) according to any one of claims 4 to 13
- a sample vessel (10), wherein the sample vessel (10) is inserted into the first holder (16) of the carrier system (18), wherein the sample vessel (10) is equipped with a cap (12), wherein the cap (12) is positioned on the sample vessel (10) or in or on the second holder (20) of the carrier system (18).

15. Laboratory system (88), comprising:
- at least one sample vessel and cap carrier system (86) according to claim 14
- at least one cap removal/ fitting device (34) for removing/ fitting the at least one cap (12) on the at least on sample vessel (10)
- a laboratory transport system (14).
